# EUROPÄISCHE PATENTANMELDUNG

(11) **EP 4 657 618 A1**
(43) Veröffentlichungstag der Anmeldung: **03.12.2025**
(21) Anmeldenummer: 25178095.3
(22) Anmeldetag: 22.05.2025
(51) Int. Cl.: H01M 50/126, H01M 50/117, H01M 50/121, H01M 50/131

(54) **BATTERIE MIT EINEM GEHÄUSE, DAS EINE VERSTÄRKUNGSSCHICHT UND EINE ISOLATIONSSCHICHT UMFASST**

(30) Priorität: 30.05.2024 DE 102024205046
(71) Anmelder: PowerCo SE, 38239 Salzgitter (DE)
(72) Erfinder: Czech, Marvin, 38239 Salzgitter (DE); Böttger, Ralph, 38239 Salzgitter (DE); Merboth, Carolin, 38239 Salzgitter (DE)

(57) **Zusammenfassung**

Batterie (1) mit mindestens einem Batterieelement, das in einem Gehäuse (2) aufgenommen ist, wobei das Gehäuse (2) ein Grundgehäuse (2a) aus Aluminium, eine mit dem Grundgehäuse (2a) verbundene Verstärkungsschicht (2c) aus einem Material, das einen Schmelzpunkt von mindestens 900°C aufweist, und eine mit dem Grundgehäuse (2a) verbundene Isolationsschicht (2b) aus einem elektrisch isolierenden Material umfasst.

## Beschreibung

Die Erfindung betrifft eine Batterie.

Eine Batterie ist ein Speicher für elektrische Energie auf elektrochemischer Basis, bei deren Entladung gespeicherte chemische Energie durch eine elektrochemische Redoxreaktion in elektrische Energie gewandelt wird (vgl. US 2023 / 0 207 954 A1). Im Kontext der Erfindung werden als Batterien sowohl sogenannte Primärbatterien, die nur für ein einmaliges Entladen und nicht für ein erneutes Laden vorgesehen sind, als auch sogenannte Sekundärbatterien beziehungsweise Akkumulatoren, die für ein mehrfaches Laden vorgesehen und entsprechend ausgelegt sind, verstanden. Ein Laden einer Sekundärbatterie stellt dabei die elektrolytische Umkehrung der bei dem Entladen ablaufenden elektrochemischen Redoxreaktion dar, die durch das Anlegen einer elektrischen Spannung realisiert wird.

Eine Batterie umfasst eine oder, üblicherweise, mehrere Batterieelemente, die innerhalb einer Umhüllung, üblicherweise in Form einer häufig als "Pouch" bezeichneten Folienumhüllung oder eines Gehäuses, angeordnet sind. Die Batterieelemente umfassen jeweils zwei Elektroden, einen zwischen den Elektroden angeordneten Separator zur elektrischen Separierung der Elektroden und einen als Ionenleiter dienenden Elektrolyten. Die zwei Elektroden eines Batterieelements unterschieden sich hinsichtlich eines umfassten Aktivmaterials, wodurch eine der Elektroden anodisch und die andere kathodisch wirksam ist (jeweils bezogen auf ein Entladen der Batteriezelle). Weiterhin umfasst eine Batterie üblicherweise zwei Batteriepole, die in die Umhüllung integriert sind und die innenseitig der Umhüllung über sogenannte Stromableiter mit den Elektroden elektrisch leitend verbunden sind. Dabei sind alle anodisch wirksamen Elektroden mit einem der Batteriepole und die kathodisch wirksamen Elektroden mit dem anderen der Batteriepole verbunden.

Eine Ausgestaltung einer Batterie mit einem Gehäuse kann den Vorteil einer im Vergleich zu Batterien mit einer Folienumhüllung höheren strukturellen Belastbarkeit der Batterie aufweisen.

Häufig wird ein Gehäuse einer Batterie aus Aluminium ausgestaltet, um eine ausreichend hohe strukturelle Festigkeit und damit Belastbarkeit bei gleichzeitig guter und kostengünstiger Herstellbarkeit in Verbindung mit einem relativ geringen Gewicht zu realisieren.

Bei einem elektrischen Kraftfahrzeug, das zumindest einen elektrischen Traktionsmotor für einen Fahrantrieb des Kraftfahrzeugs umfasst, wird dem Traktionsmotor die für dessen Betrieb erforderliche Leistung von einer sogenannten Traktionsbatterie zur Verfügung gestellt, die üblicherweise eine Vielzahl von miteinander verschalteten (Einzel-)Batterien umfasst.

Von einer Batterie eines Kraftfahrzeugs, insbesondere wenn diese Teil einer Traktionsbatterie des Kraftfahrzeugs ist, kann ein erhebliches Gefährdungspotenzial ausgehen, wenn diese beispielsweise aufgrund eines Unfalls des Kraftfahrzeugs beschädigt wird. Bei einer Beschädigung einer Batterie besteht die Gefahr eines sogenannten thermischen Durchgehens, was auch als "thermal runaway" bezeichnet wird. Hierbei handelt es sich grundsätzlich um eine Überhitzung einer exothermen chemischen Reaktion oder einer technischen Apparatur aufgrund eines sich selbst verstärkenden, Wärme produzierenden Prozesses, der bei einer Batterie insbesondere aus einem durch eine Beschädigung bewirkten internen Kurzschluss resultieren kann. Bei einer Batterieeinheit mit mehreren Batterien, beispielsweise einer Traktionsbatterie eines Kraftfahrzeugs, besteht zudem die Gefahr, dass ein thermisches Durchgehen einer Batterie der Batterieeinheit zu einer thermischen Propagation, d.h. zu einer Überhitzung auch der anderen Batterien der Batterieeinheit in der Art einer Kettenreaktion, führt.

Die DE 10 2020 129 734 A1 beschreibt ein Gehäuse für eine Batterie mit einem Gehäusekörper auf der Basis von Aluminium oder dessen Legierungen. Der Gehäusekörper ist außenseitig zumindest bereichsweise von einer Folie aus Metall oder Metallverbund mit einem Schmelzpunkt von wenigstens 1200°C und einer Dicke von 10 µm bis 150 µm umgeben. Dadurch soll im Falle eines thermischen Durchgehens der Batteriezelle auf einfache und kostengünstige Weise für einen Schutz der Umgebung vor den gebildeten Heißgasen sowie für eine Verringerung der Brandgefahr gesorgt werden, ohne das Gewicht der Batterie in nennenswerter Weise zu vergrößern.

Die CN 208 812 658 U beschreibt eine Kompositplatte mit einer Basisschicht aus Aluminium und einer Verschleißschutzschicht aus Stahl, wobei diese Schichten miteinander verklebt sind.

Der Erfindung liegt die Aufgabe zugrunde, eine Batterie, wie sie aus der
DE 10 2020 129 734 A1 bekannt ist, zu verbessern.

Diese Aufgabe ist bei einer Batterie gemäß dem Patentanspruch 1 gelöst. Vorteilhafte Ausgestaltungsformen einer solchen Batterie sind Gegenstände der weiteren Patentansprüche und ergeben sich aus der nachfolgenden Beschreibung der Erfindung.

Eine erfindungsgemäße Batterie, die insbesondere eine Lithium-Ionen-Batterie und/oder eine als (Teil einer) Traktionsbatterie eines Kraftfahrzeugs vorgesehene Batterie sein kann, umfasst mindestens ein Batterieelement, vorzugsweise mehrere Batterieelemente, und ein das Batterieelement oder die Batterieelemente (vollständig) umgebendes Gehäuse.

Das Gehäuse umfasst ein Grundgehäuse, das aus Aluminium ausgestaltet ist. Dieses besteht folglich zumindest teilweise, vorzugsweise vollständig aus Aluminium. Dabei wird unter dem Begriff "Aluminium" allgemein ein metallisches Material verstanden, dessen Hauptbestandteil Aluminium ist.

Weiterhin umfasst das Gehäuse eine Verstärkungsschicht, die vorzugsweise mit dem Grundgehäuse (direkt oder indirekt, d.h. unter Zwischenanordnung mindestens einer weiteren Schicht) fest verbunden ist und die aus einem Material besteht, das einen Schmelzpunkt von mindestens 900°C aufweist. Vorzugsweise sollte der Festigkeitsverlust des Materials der Verstärkungsschicht bei einer Temperatur von 500°C geringer als 50% sein, wobei insbesondere der Reduktionsfaktor bezüglich der Streckgrenze: k_{y,Θ} > 0,7 und bezüglich des Elastizitätsmoduls k_{E,Θ} > 0,5 sein sollte. Die Verstärkungsschicht dient dazu, das Grundgehäuse, das aufgrund einer Ausgestaltung aus Aluminium bereits bei relativ geringen Temperaturen einen erheblichen Festigkeitsverlust zeigen kann, zu verstärken. Ein solcher Festigkeitsverlust kann dabei nicht nur in der relativ geringen Schmelztemperatur von Aluminium, die bei Reinaluminium bei ca. 660°C liegt, sondern auch darin begründet sein, dass Aluminium bereits ab einer Temperatur, die nur ca. 40% der Schmelztemperatur beträgt, einen starken Verlust seiner Eigenfestigkeit zeigt. Dadurch kann ein Gehäuse aus Aluminium einer konventionellen Batterie den bei einem thermischen Durchgehen innerhalb des Gehäuses auftretenden Temperaturen, die mehr als 1000°C betragen können, nicht in einem ausreichenden Maße beziehungsweise über einen ausreichend langen Zeitraum standhalten.

Die Verstärkungsschicht des Gehäuses einer erfindungsgemäßen Batterie, dessen Material erfindungsgemäß einen Schmelzpunkt von mindestens 900°C aufweist, verstärkt das Aluminium insbesondere für den Fall, dass dieses einer zu hohen Temperatur ausgesetzt wird, so dass dann eine noch ausreichende Festigkeit für das Gehäuse insgesamt realisiert werden kann. Da die Verstärkungsschicht für diese Verstärkungsfunktion keine besonders große Schichtdicke aufweisen muss, kann erreicht werden, dass deren Vorhandensein keine relevanten funktionalen Nachteile mit sich bringt. Dies gilt insbesondere hinsichtlich der Abmessungen und/oder des Gewichts des Gehäuses.

Das Gehäuse einer erfindungsgemäßen Batterie kann folglich die für ein Gehäuse aus Aluminium üblichen Vorteile einer ausreichenden Festigkeit (bei normalen Betriebstemperaturen) bei gleichzeitig relativ geringer Masse aufweisen, ohne den beschriebenen Nachteil bezüglich des erheblichen Festigkeitsverlusts im Falle eines thermischen Durchgehens der Batterie in Kauf nehmen zu müssen.

Weiterhin umfasst das Gehäuse einer erfindungsgemäßen Batterie eine Isolationsschicht aus einem elektrisch isolierenden Material, die vorzugsweise mit dem Grundgehäuse (direkt oder indirekt) fest verbunden ist. Durch diese Isolationsschicht ist es möglich, zumindest das mindestens eine innerhalb des Gehäuses angeordnete Batterieelement gegenüber der Umgebung der Batterie elektrisch zu isolieren, was insbesondere deshalb relevant sein kann, weil das Grundgehäuse aus Aluminium und damit grundsätzlich elektrisch leitend ausgeführt ist.

Das mindestens eine Batterieelement umfasst (jeweils) zwei Elektroden, einen zwischen den
Elektroden angeordneten Separator zur elektrischen Separierung der Elektroden und einen als Ionenleiter zwischen den Elektroden dienenden Elektrolyten. Dieser Elektrolyt kann flüssig oder fest ausgestaltet sein und, insbesondere bei einer festen Ausgestaltung, auch als Separator fungieren.

Eine erfindungsgemäße Batterie kann weiterhin einen ersten Batteriepol und einen zweiten Batteriepol umfassen, wobei die Batteriepole zur elektrischen Anbindung der Batterie an einen externen Stromkreis vorgesehen sind. Dazu können die Batteriepole derart in das Gehäuse integriert sein, dass ein erster Abschnitt davon außerhalb des Gehäuses angeordnet und dadurch für eine Anbindung an den externen Stromkreis zugänglich ist, während ein zweiter, innerhalb der Umhüllung liegender Abschnitt einer elektrischen Verbindung mit dem mindestens einen Batterieelement dient. Dabei kann eine erste Elektrode des (jedes) Batterieelement(s) mit dem ersten Batteriepol und eine zweite Elektrode des (jedes) Batterieelement(s) mit dem zweiten Batteriepol elektrisch verbunden sein.

Das Gehäuse ist vorzugsweise formstabil ausgestaltet. Als "formstabil" gilt dabei ein Gehäuse, wenn dessen dreidimensionale Form ohne externe Belastung nicht infolge der eigenen Gewichtskraft kollabiert. Vorzugsweise kann ein solches Gehäuse derart formstabil ausgestaltet sein, dass dieses bei einer Belastung durch externe Kräfte, die bei einer normalen Nutzung auftreten, nicht kollabiert und, besonders bevorzugt, auch nicht in einem relevanten Maße deformiert wird. Das Gehäuse kann weiterhin bevorzugt derart ausgestaltet sein, dass dieses gasdicht verschlossen ist, was sich positiv hinsichtlich der Leistungsfähigkeit und der Betriebssicherheit der Batterie auswirken kann.

Das Gehäuse einer erfindungsgemäßen Batterie kann vorzugsweise eine Quaderform aufweisen, was eine hinsichtlich des benötigten Platzbedarfs vorteilhafte Nutzung der Batterie ermöglicht. Ein quaderförmiges Gehäuse weist eine Länge, Breite und Höhe auf, wobei erfindungsgemäß die Länge die größte, die Breite die mittlere und die Höhe die kleinste der (Kanten-)Abmessungen ist (sofern entsprechende Unterschiede vorliegen). Das Gehäuse umfasst dann zwei Großseiten, die durch die Länge und die Breite aufgespannt werden, zwei Längsseiten, die durch die Länge und die Höhe aufgespannt werden, sowie zwei Stirnseiten, die durch die die Breite und die Höhe aufgespannt werden. Batteriepole einer solchen Batterie können vorzugsweise in eine oder in beide der Stirnseiten integriert sein.

Gemäß einer vorteilhaften Ausgestaltungsform einer erfindungsgemäßen Batterie kann vorgesehen sein, dass die Isolationsschicht und/oder die Verstärkungsschicht außenseitig (d.h. auf der von dem mindestens einen Batterieelement abgewandten Seite) des Grundgehäuses angeordnet ist/sind. Eine solche Batterie kann sich durch eine vorteilhafte Herstellbarkeit auszeichnen.

Gemäß einer weiteren Ausgestaltungsform kann vorgesehen sein, dass die Isolationsschicht und/oder die Verstärkungsschicht innenseitig (d.h. auf der dem mindestens einen Batterieelement zugewandten Seite) des Grundgehäuses angeordnet ist/sind. Dadurch kann sich ein Schutz der Isolationsschicht und/oder der Verstärkungsschicht durch das Grundgehäuse 2a ergeben.

Die Isolationsschicht kann vorzugsweise zumindest teilweise, vorzugsweise vollständig zwischen dem Grundgehäuse und der Verstärkungsschicht angeordnet sein. Eine solche Batterie kann sich durch eine vorteilhafte Herstellbarkeit auszeichnen.

Es kann aber auch vorgesehen sein, dass die Verstärkungsschicht zumindest teilweise, vorzugsweise vollständig zwischen dem Grundgehäuse und der Isolationsschicht angeordnet ist. Auch dies kann sich vorteilhaft hinsichtlich einer Herstellbarkeit der Batterie und/oder hinsichtlich der Verstärkungsfunktion, die mittels der Verstärkungsschicht realisiert wird, auswirken.

Gemäß einer weiteren Ausgestaltungsform einer erfindungsgemäßen Batterie kann vorgesehen sein, dass die Verstärkungsschicht in das Material der Isolationsschicht zumindest teilweise, vorzugsweise vollständig eingebettet ist. Dies kann den Vorteil aufweisen, dass die Verstärkungsschicht beziehungsweise deren Material mittels des Materials der Isolationsschicht von der Umgebung separiert und damit durch diese geschützt sein kann. Insbesondere kann dadurch vermieden werden, dass das Material der Verstärkungsschicht einer Atmosphäre ausgesetzt ist, die eine Korrosion dieses Materials bewirken könnte. Dementsprechend kann die Einbettung der Verstärkungsschicht in das Material der Isolationsschicht insbesondere derart ausgestaltet sein, dass diese zumindest flüssigkeitsdicht, vorzugsweise auch gasdicht bewirkt ist.

Gemäß einer bevorzugten Ausgestaltungsform einer erfindungsgemäßen Batterie kann vorgesehen sein, dass die Isolationsschicht die Verstärkungsschicht vollständig von dem Grundgehäuse separiert. Dadurch kann insbesondere vermieden werden, dass eine mittels der Isolationsschicht zu bewirkende elektrische Isolierung des Gehäuses aufgrund eines direkten Kontakts zwischen der Verstärkungsschicht und dem Grundgehäuse beeinträchtigt ist. Dies gilt insbesondere bei einer Ausgestaltung der Verstärkungsschicht aus einem elektrisch leitfähigen Material.

Vorzugsweise kann vorgesehen sein, dass die Verstärkungsschicht als Folie, d.h. als homogenes Flächengebilde mit einer im Vergleich zu den Flächenabmessungen (Breite und Länge) sehr geringen Höhe (Schichtdicke) ausgestaltet ist. Insbesondere kann die Schichtdicke maximal 1/100 oder 1/1000 der (einzelnen) Flächenabmessungen bestragen. Durch die sehr geringe Höhe kann die Folie insbesondere leicht verformbar sein. Eine als Folie ausgestaltete Verstärkungsschicht kann einfach und kostengünstig herstellbar sowie verarbeitbar sein. Weiterhin kann sich diese durch eine vorteilhafte Verstärkungswirkung, insbesondere auch im Verhältnis zu ihrer Masse, auszeichnen. Eine als Folie ausgestaltete Verstärkungsschicht kann insbesondere vollflächig, d.h. ohne vollumfänglich umrandete Durchgangsöffnungen, die nicht dafür vorgesehen sind, eine Komponente zu umgegeben, oder mit mehreren solcher Durchgangsöffnungen, d.h. als Lochfolie oder als perforierte Folie, ausgestaltet sein.

Alternativ zu einer Ausgestaltung der Verstärkungsschicht als Folie kann diese vorteilhafterweise auch eine Netzstruktur aufweisen, worunter verstanden wird, dass diese aus einer Vielzahl von miteinander verbundenen, insbesondere geordnet oder ungeordnet verschlungenen Fäden (Netzstruktur in Form eines Geflechts, Gewebes, Vlieses etc.) oder Stäben (Netzstruktur in Form einer Gitterstruktur) aus dem Material der Verstärkungsschicht ausgebildet ist, wobei die Fäden oder Stäbe regelmäßig oder unregelmäßig geformte Öffnungen ausbilden beziehungsweise begrenzen. Eine solche Verstärkungsschicht kann sich insbesondere durch eine relativ geringe Masse auszeichnen.

Gemäß einer bevorzugten Ausgestaltungsform einer erfindungsgemäßen Batterie kann vorgesehen sein, dass das Gehäuse die Verstärkungsschicht nur abschnittsweise umfasst. Demnach ist mindestens ein Abschnitt des Grundgehäuses nicht von der Verstärkungsschicht überdeckt. Dadurch kann sich eine relativ einfache und damit kostengünstige Herstellbarkeit einer erfindungsgemäßen Batterie ergeben, ohne dass sich dies in einem relevanten Maße negativ auf die Verstärkungsfunktion, die mittels der Verstärkungsschicht realisiert wird, auswirkt.

Das Gehäuse einer erfindungsgemäßen Batterie kann vorzugsweise ein Überdruckventil umfassen, das derart ausgebildet ist, dass dieses bei dem Vorliegen eines definierten Überdrucks innerhalb des Gehäuses öffnet, um einen Druckausgleich mit der Umgebung zu ermöglichen. Bei einer solchen erfindungsgemäßen Batterie kann weiterhin bevorzugt vorgesehen sein, dass die Verstärkungsschicht nur in einem das Überdruckventil umgebenden Bereich angeordnet ist. Dadurch kann die Verstärkungsschicht lediglich an einem Abschnitt des Gehäuses positioniert sein, der im Falle eines thermischen Durchgehens des mindestens einen Batterieelements einer besonders hohen thermischen Belastung ausgesetzt sein kann, denn Heißgase, die sich infolge eines thermischen Durchgehens des mindestens einen Batterieelements innerhalb des Gehäuses ausbilden, strömen aufgrund des sich ausbildenden Druckausgleichs in Richtung des Auslassventil und führen im Bereich des Überdruckventils zu einem besonders hohen Eintrag von Wärmeenergie in das Gehäuse. Das Überdruckventil kann vorzugsweise als Berstventil, beispielsweise als Berstfolie, ausgestaltet sein, das/die bei dem Vorliegen eines definierten Überdrucks innerhalb des Gehäuses zerstört wird und dadurch das Ventil öffnet. Ein solches Berstventil kann einfach und damit kostengünstig realisiert werden.

Vorzugsweise kann vorgesehen sein, dass das Material der Verstärkungsschicht ein Metall oder eine Keramik ist oder zumindest umfasst, da sich diese Materialien durch eine hohe Festigkeit auch bei hohen Temperaturen auszeichnen können. Besonders bevorzugt kann das Material der Verstärkungsschicht ein Stahl (nach DIN EN 10020), insbesondere ein Edelstahl, sein, da dadurch die Verstärkungsschicht nicht nur sehr vorteilhafte Materialeigenschaften aufweisen, sondern zudem relativ kostengünstig herstellbar sein kann.

Weiterhin bevorzugt kann vorgesehen sein, dass das Material der Isolationsschicht ein Kunststoff ist, wodurch eine kostengünstige Ausgestaltung der Isolationsschicht mit guter elektrischer Isolationswirkung realisiert werden kann.

Die Schichtdicke der Verstärkungsschicht einer erfindungsgemäßen Batterie kann vorzugsweise zwischen 0,01 mm und 0,4 mm, besonders bevorzugt zwischen 0,05 mm und 0,2 mm, betragen. Dadurch kann ein vorteilhafter Kompromiss zwischen einer ausreichenden Verstärkungswirkung und einer nur relativ kleinen Masse der Verstärkungsschicht erreicht werden.

Gemäß einer bevorzugten Ausgestaltungsform einer erfindungsgemäßen Batterie kann vorgesehen sein, dass die Verstärkungsschicht und/oder die Isolationsschicht verklebt ist/sind. Dadurch kann eine einfache und kostengünstige Herstellbarkeit für eine erfindungsgemäße Batterie realisiert werden. Vorzugsweise kann die Verstärkungsschicht und/oder die Isolationsschicht bereits in einem Ausgangszustand, d.h. vor der Verbindung zur Integration in das Gehäuse, eine Klebeschicht aufweisen. Die Klebeschicht kann dabei insbesondere bereits Teil des Werkstoffs zur Ausbildung der Verstärkungsschicht oder der Isolationsschicht in einem Lieferzustand sein, so dass im Rahmen der Herstellung der Batterie ein Auftragen des Klebstoffs nicht mehr erfolgen muss.

Die Erfindung wird nachfolgend anhand von in den Zeichnungen dargestellten Ausführungsbeispielen näher erläutert. In den Zeichnungen zeigt, jeweils in vereinfachter Darstellung:
- Fig. 1:: eine erfindungsgemäße Batterie,
- Fig. 2:: einen Längsschnitt durch eine Batterie gemäß der Fig. 1 in einer ersten Ausgestaltungsform,
- Fig. 3:: einen Längsschnitt durch eine Batterie gemäß der Fig. 1 in einer zweiten Ausgestaltungsform und
- Fig. 4:: einen Längsschnitt durch eine Batterie gemäß der Fig. 1 in einer dritten Ausgestaltungsform.

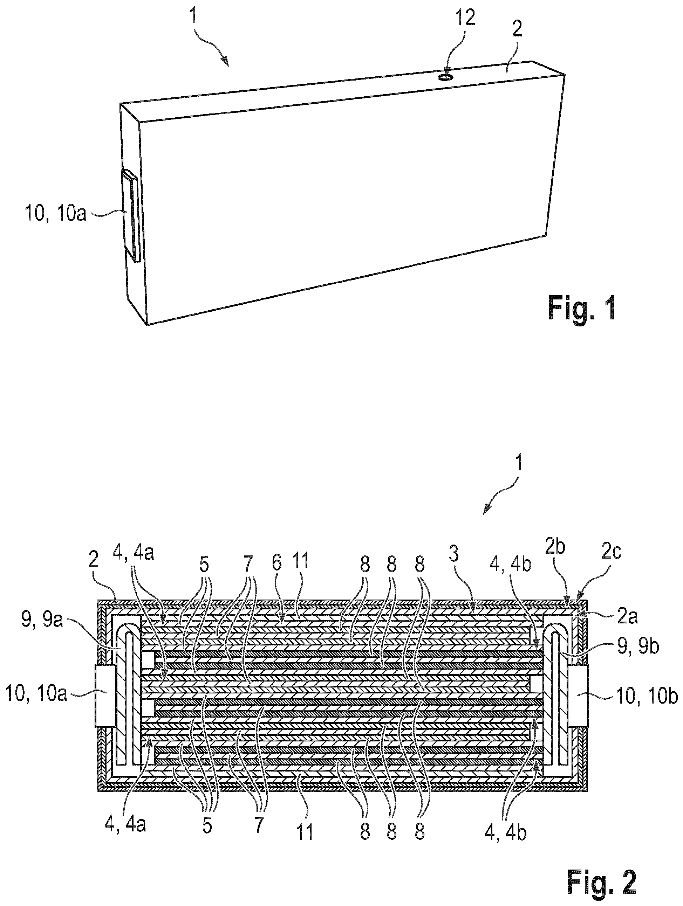

Die Fig. 1 bis 4 zeigen verschiedene Ausgestaltungsformen erfindungsgemäßer Batterien 1.

Die Batterien 1 umfassen jeweils ein quaderförmigen Gehäuse 2 und einen innerhalb des Gehäuses 2 angeordneten Batterieelementeverbund 3. Der Batterieelementeverbund 3 umfasst mehrere Batterieelemente. Elektroden 4 und Separatoren 5 der Batterieelemente liegen gestapelt in Form eines sogenannten Elektroden-Separatoren-Verbunds (ESV) 6 vor. Dieser umfasst in wechselweiser Anordnung eine Mehrzahl von ersten (4a) der Elektroden 4, die bei einer Entladung der Batterie 1 als Anoden fungieren, und eine Mehrzahl von zweiten (4b) der Elektroden 4, die bei einer Entladung der Batterie 1 als Kathoden fungieren. Infolge der wechselweisen Anordnung der Elektroden 4 ist jeweils eine erste Elektrode 4a zwischen zwei zweiten Elektroden 4b und eine zweite Elektrode 4b zwischen zwei ersten Elektroden 4a angeordnet. Dabei sind benachbarte Elektroden 4 jeweils durch einen der Separatoren 5 räumlich getrennt und dadurch auch voneinander elektrisch isoliert. Jeweils eine erste Elektrode 4a und eine zweite Elektrode 4b sowie ein zwischen diesen angeordneter Separator 5 bilden ein Batterieelement aus. Infolge der Stapelung ergibt sich dabei, dass jede der Elektroden 4 mit Ausnahme der beiden in dem Stapel beziehungsweise dem ESV 3 am weitesten außen gelegenen Elektroden 4 funktional Bestandteil von zwei Batterieelementen ist.

Die Batterieelemente umfassen weiterhin einen Elektrolyten. Die Separatoren 5 sind dabei mit dem flüssigen Elektrolyten getränkt. Durch den Elektrolyten ist eine Leitung von Ionen zwischen benachbarten Elektroden 4 über den jeweils dazwischen liegenden Separator 5 möglich.

Jede der Elektroden 4 umfasst ein flächiges, folienförmiges Substrat 7, das beispielsweise bei den als Anoden vorgesehenen ersten Elektroden 4a aus Kupfer und bei den als Kathoden vorgesehenen zweiten Elektroden 4b aus Aluminium ausgestaltet sein kann. In einem quadratischen Abschnitt davon sind die beiden in Stapelrichtung des ESV 6 gelegenen Großflächen jeder der Elektroden 4 mit einer Beschichtung aus einem Aktivmaterial 8 versehen, um eine Wirkung der verschiedenen Elektroden 4a, 4b als Anoden oder Kathoden während einer Nutzung der Batterie 1 zu ermöglichen. Im Bereich dieser quadratischen Abschnitte der Substrate 7 und damit der Elektroden 4 sind diese und die entsprechend quadratisch geformten Separatoren 5 gestapelt, woraus sich die Quaderform des ESV 6 ergibt.

An einer Querseite des rechteckigen Abschnitts jeder Elektrode 4 ist ein Bereich des Substrats 7 vorgesehen, in dem dieses nicht mit der Beschichtung aus dem jeweiligen Aktivmaterial 8 versehen ist. Dieser Bereich der Elektroden 4 dient jeweils als Stromableiter 9, über den die einzelnen Elektroden 4 mit einem jeweils zugeordneten Batteriepol 10 der Batterie 1 elektrisch leitend verbunden sind. Die Stromableiter 9a von allen ersten Elektroden 4a, zusammengefasst als Stromableiterstapel, sind dabei mit einem ersten (10a) der Batteriepole 10 und die Stromableiter 8b von allen zweiten Elektroden 4b, ebenfalls zusammengefasst als Stromableiterstapel, sind mit einem zweiten (10b) der Batteriepole 10 verbunden.

Die Batteriepole 10 sind derart in das Gehäuse 2 integriert, dass ein Anschlussabschnitt davon außenseitig zugänglich ist, um die Batterie 1 extern elektrisch kontaktieren zu können. Dabei sind die beiden Batteriepole 10 an den sich gegenüberliegenden Stirnseiten des quaderförmigen Gehäuses 2 angeordnet.

Der Batterieelementeverbund 3 umfasst weiterhin zwei Deformationselemente 11, von denen jeweils eines an einer der Großseiten des ESV 6 anliegend angeordnet ist. Die Deformationselemente 11 gleichen unterschiedliche Ausdehnungen des ESV 6 einerseits und des Gehäuses 2 andererseits durch eine Deformation aus. Dies ermöglicht, den ESV 6 stets spielfrei innerhalb des Gehäuses 2 zu positionieren und gleichzeitig einen zu hohen Druck auf dessen Komponenten infolge einer größeren Ausdehnung im Vergleich zu dem Gehäuse 2 zu vermeiden.

Das Gehäuse 2 der jeweiligen Batterien 1, in das ein Überdruckventil 12 integriert ist, umfasst ein Grundgehäuse 2a aus Aluminium. Das Gehäuse 2 umfasst weiterhin jeweils eine Isolationsschicht 2b aus einem elektrisch isolierenden Material sowie eine Verstärkungsschicht 2c, die vorzugsweise aus einer Keramik oder einem Stahl besteht. Die Isolationsschicht 2b und die Verstärkungsschicht 2c sind jeweils außenseitig des Grundgehäuses 2a angeordnet und umgeben dabei das Grundgehäuse 2a vollumfänglich oder zumindest möglichst vollumfänglich.

Bei der Batterie 1 gemäß der Fig. 2 ist die Verstärkungsschicht 2c außenseitig der Isolationsschicht 2b angeordnet. Die Isolationsschicht 2b separiert dabei die Verstärkungsschicht 2c von dem Grundgehäuse 2a.

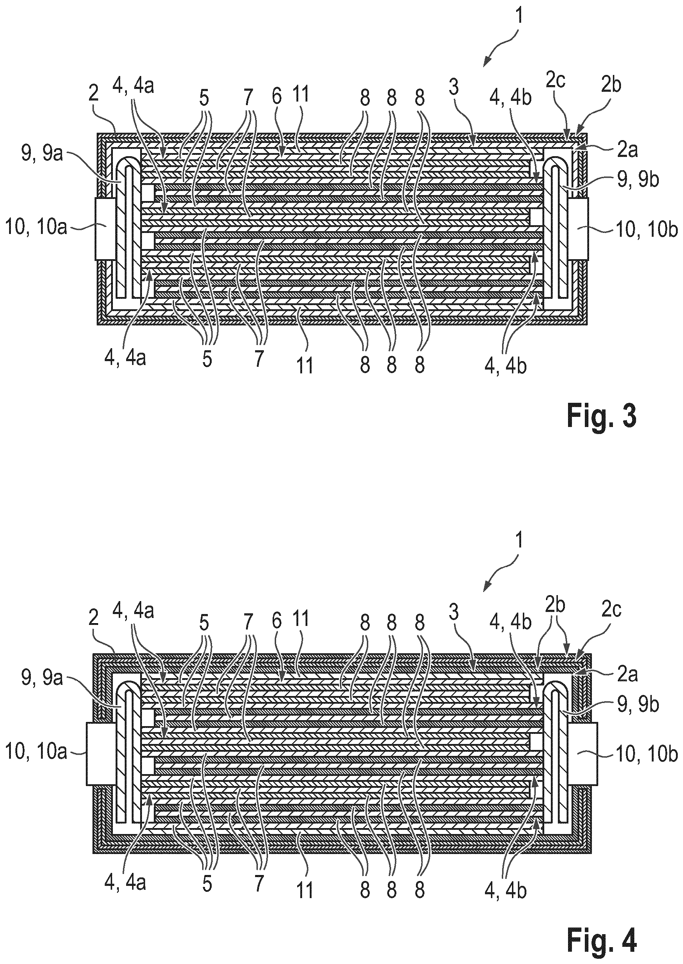

Bei der Batterie 1 gemäß der Fig. 3 ist die Anordnung der Isolationsschicht 2b und der Verstärkungsschicht 2c im Vergleich zu der Batterie gemäß der Fig. 2 umgekehrt, so dass die Verstärkungsschicht 2c zwischen dem Grundgehäuse 2a und der Isolationsschicht 2b angeordnet ist.

Bei der Batterie 1 gemäß der Fig. 4 ist die Verstärkungsschicht 2c dagegen in das Material der Isolationsschicht 2b eingebettet.

### Bezugszeichenliste

- 1: Batterie
- 2: Gehäuse
- 2a: Grundgehäuse
- 2b: Isolationsschicht
- 2c: Verstärkungsschicht
- 3: Batterieelementeverbund
- 4: Elektrode
- 4a: erste Elektrode
- 4b: zweite Elektrode
- 5: Separator
- 6: Elektroden-Separatoren-Verbund (ESV)
- 7: Substrat
- 8: Aktivmaterial
- 9: Stromableiter
- 9a: erster Stromableiter
- 9b: zweiter Stromableiter
- 10: Batteriepol
- 10a: erster Batteriepol
- 10b: zweiter Batteriepol
- 11: Deformationselement
- 12: Überdruckventil

## Patentansprüche

1. Batterie (1) mit mindestens einem Batterieelement, das in einem Gehäuse (2) aufgenommen sind, wobei das Gehäuse (2) ein Grundgehäuse (2a) aus Aluminium sowie eine Verstärkungsschicht (2c) aus einem Material, das einen Schmelzpunkt von mindestens 900°C aufweist, umfasst, **dadurch gekennzeichnet, dass** das Gehäuse (2) weiterhin eine Isolationsschicht (2b) aus einem elektrisch isolierenden Material aufweist.

2. Batterie (1) gemäß Anspruch 1, **dadurch gekennzeichnet, dass** die Isolationsschicht (2b) und/oder die Verstärkungsschicht (2c) außenseitig des Grundgehäuses (2a) angeordnet ist/sind.

3. Batterie (1) gemäß Anspruch 1 oder 2, **dadurch gekennzeichnet, dass** die Isolationsschicht (2b) und/oder die Verstärkungsschicht (2c) innenseitig des Grundgehäuses (2a) angeordnet ist/sind.

4. Batterie (1) gemäß einem der vorhergehenden Ansprüche, **dadurch gekennzeichnet, dass** die Isolationsschicht (2b) zwischen dem Grundgehäuse (2a) und der Verstärkungsschicht (2c) angeordnet ist.

5. Batterie (1) gemäß einem der Ansprüche 1 bis 3, **dadurch gekennzeichnet, dass** die Verstärkungsschicht (2c) zwischen dem Grundgehäuse (2a) und der Isolationsschicht (2b) angeordnet ist.

6. Batterie (1) gemäß einem der Ansprüche 1 bis 3, **dadurch gekennzeichnet, dass** die Verstärkungsschicht (2c) in das Material der Isolationsschicht (2b) eingebettet ist.

7. Batterie (1) gemäß einem der vorhergehenden Ansprüche, **dadurch gekennzeichnet, dass** die Verstärkungsschicht (2c) eine Netzstruktur aufweist.

8. Batterie (1) gemäß einem der vorhergehenden Ansprüche, **dadurch gekennzeichnet, dass** das Gehäuse (2) die Verstärkungsschicht (2c) nur abschnittsweise umfasst, wobei die Verstärkungsschicht (2c) nur in einem Bereich angeordnet ist, der ein Überdruckventil (12) des Gehäuses (2) umgibt.

9. Batterie (1) gemäß einem der vorhergehenden Ansprüche, **dadurch gekennzeichnet, dass** das Material der Verstärkungsschicht (2c) ein Metall und/oder eine Keramik ist oder umfasst.

10. Batterie (1) gemäß einem der vorhergehenden Ansprüche, **dadurch gekennzeichnet, dass** die Verstärkungsschicht (2c) und/oder die Isolationsschicht (2b) verklebt ist/sind.
